# EUROPEAN PATENT APPLICATION

(11) **EP 4 825 499 A1**
(43) Date of publication of application: **21.10.2026**
(21) Application number: 26164113.8
(22) Date of filing: 11.03.2026
(51) Int. Cl.: B05C 17/005, A61C 5/62

(54) **PISTON AND CARTRIDGE**

(71) Applicant: medmix Switzerland AG, 9469 Haag (Rheintal) (CH)
(72) Inventor: Fohmann, Karl Georg, 9493 Mauren (LI)
(74) Representative: Manitz Finsterwald Patent- und Rechtsanwaltspartnerschaft mbB

(57) **Abstract**

The present invention relates to a piston for a cartridge and to a cartridge comprising such a piston. The piston is provided with stress relieving features that are designed to prevent cracking of the piston when used.

## Description

The present invention relates to a piston for a cartridge and to a cartridge comprising such a piston. The piston is provided with stress relieving features that are designed to prevent cracking of the piston when used.

Viscous or paste-like fluid materials, such as sealants, adhesives, chemical anchors, or dental materials, are frequently stored in cartridges. In order to discharge such a fluid material from the cartridge, a piston is typically inserted into the cartridge to push out the fluid through a suitable dispensing outlet of the cartridge.

Pistons of the aforementioned type are usually made of polymeric materials. However, the fluids to be dispensed from the cartridge usually contain organic solvents or other chemicals which may penetrate into and degrade polymeric materials that are conventionally used for manufacturing such pistons, such as LDPE. As a result, the mechanical strength of the polymeric material deteriorates, at least in those regions which are in direct contact with the fluid material. Consequently, cracks tend to form in the piston. Due to a combination of mechanical and chemical stress, this may lead to failure of the sealing system of the cartridge during operation, resulting in a loss of fluid material and exposure of operators to potentially harmful chemicals which may be present in the fluid material.

For this reason it is an object of the present invention to make available a piston with which the drawbacks of the prior art are minimized. It is a further object of the invention to provide a piston that is simple to manufacture and to handle on installation into a cartridge and on use.

This object is satisfied by a piston and by a cartridge in accordance with the respective independent claim.

Such a piston for a cartridge for storing a material in a storage chamber of the cartridge, may include a piston body which has a conveying side as well as a drive side disposed opposite the conveying side, the piston may further include a piston jacket, wherein the piston jacket is arranged around a piston axis and the piston body is surrounded by the piston jacket at the peripheral side, wherein the piston jacket has one or more sealing elements for forming a fluid-tight connection between the sealing element of the piston jacket and an inner wall of the storage chamber of the cartridge so that the sealing element forms a fluid-tight connection between the conveying side and the drive side in the installed state, wherein the conveying side may comprise one or more stress relieving features.

A piston comprising stress relieving features shows an increased resistance towards the fluid material and improved durability. Hence, with a piston according to the present invention, fluid materials can be reliably and safely dispensed from a cartridge, without leakage due to cracks forming in the piston. Thereby also a shelf life of materials stored in the piston can be reduced.

In this connection it should be noted that the conveying side is that side of the piston that is designed to come into contact with a material stored in a cartridge.

It should further be noted that the drive side is that side of the piston that is acted on in order to dispense or drive material from a cartridge.

It should further be noted that the piston jacket closes off the piston on a radial outer side thereof in order to prevent a material stored in a cartridge from leaking into the interior of the piston via the peripheral outer side.

It should further be noted that the sealing elements can be formed by sealing lips and optionally through an O-ring in order to prevent a material stored in the cartridge from leaking out of the drive side of the piston on use of the cartridge.

The one or more stress relieving features may comprise cut-outs. Cut-outs are simple to manufacture and can reduce the stress at pre-defined positions within the piston.

The piston may be a ring piston and the piston body may comprises a central aperture, with one or more aperture sealing elements, such as sealing lips, being arranged facing radially inwardly at the aperture.

Such a piston can be used in a simple manner in a so-called co-axial cartridge.

The cut-outs may be arranged at the one of the one or more sealing elements. Arranging the stress-relieving features in the proximity of a sealing element reduces the pressure in a region where external pressure may arise on the piston during a use thereof.

The piston may further comprise a centering ring. Such a centering ring is particularly beneficial in a ring piston, as it aids in the insertion of the piston into a cartridge on assembly thereof.

The centering ring may be arranged at the central aperture.

The centering ring may be arranged between one of the one or more aperture sealing elements and a front cover of the piston. In this way the piston can be aligned relative to the cartridge on installation before the sealing element comes into contact with the cartridge.

The piston may comprise an inner seat set back from a front cover of the piston. Such an inner seat can beneficially be provided in order to facilitate a front filing of a cartridge comprising such a piston.

The inner seat may be arranged at the same axial height or at approximately the same axial height as the centering ring. Alternatively the inner seat may be arranged closer to the drive side than the centering ring. In this way the piston can be inserted in a more facile manner into a cartridge.

The centering ring may comprise said one or more stress relieving features. The centering ring may be subjected to both strong internal and external forces and providing the stress relieving features there yields an improved piston.

The stress relieving features of the centering ring may be formed by the cut-outs.

The one or more stress relieving features may be arranged at a radial inner part of the conveying side.

The provision of stress relieving features at a radial inner position of a ring piston is beneficial as this is generally that part of the piston that is subjected to the highest loads and can thus be subjected to cracking and fatigue.

The one or more stress relieving features may not interfere with a sealing element. In this way a sealing function of the piston is maintained.

The conveying side may comprise a front cover, with the front cover comprising depressions. Such depressions may be useful for carrying out an injection molding process.

The piston body may contain one or more venting elements by which the conveying side and the drive side can be connected to one another by a respective bore.

Besides the fluid material to be dispensed, the storage chamber of the cartridge may contain a gas, such as air. By providing one or more venting elements connecting the conveying side and the drive side of the piston, e.g. by means of a venting passage, a channel may be formed which allows gas to be discharged from the storage chamber even after the piston has been inserted into the cartridge.

The piston may be made of a polymeric material comprising at least one polymer, the polymeric material having a Shore D hardness of 55 or more.

It has been found that the formation of cracks in the piston can be greatly reduced when the Shore D hardness of the polymeric material is 55 or more. The piston formed from such polymeric materials shows increased resistance towards the fluid material and improved durability. Hence, with a piston according to the present invention, fluid materials can be reliably and safely dispensed from a cartridge, without leakage due to cracks forming in the piston.

Stiffening ribs may be arranged on the drive side for connecting the piston jacket to the piston body and/or an element securing against tilting may be arranged.

The presence of stiffening ribs improves the mechanical stability of the cartridge. Hence, the cartridge resists deformation even when under pressure load from a dispensing device. When an element for securing against tilting is present, the conveying side of the piston remains within a plane that is essentially perpendicular to the longitudinal axis of the cartridge. Hence, it is ensured that the outer circumference of the piston remains in contact with the inner wall of the cartridge during the entire dispensing process.

The piston may be a piston for a cartridge for storing a fluid material selected from sealants, adhesives, chemical anchors, and dental materials. Such fluid materials are typically viscous or paste-like and may contain large amounts of solids. The piston according to the present invention has been found to be especially advantageous for dispensing such fluid materials.

The at least one polymer may be a polyolefin. The polyolefin is a polymeric, saturated hydrocarbon obtained by polymerization of alkenes (olefins), such as ethylene, propylene, or butylene. In the piston of the present invention, the polyole-fin is not particularly limited. Typical examples of suitable polyolefins are polyethylene (PE), polypropylene (PP), polybutylene (PB), polyisobutylene (PIB), and polymethylpentene (PMP). The polyolefin may be a single polyolefin, or may be a blend of two or more individual polyolefins.

The polyolefin may be a homopolymer, i.e. a polymer which is essentially derived from a single type of olefin monomer, or may be a copolymer, i.e. a polymer which is derived from two or more types of olefin monomers, such as, for example, a copolymer of ethylene and propylene.

When the polyolefin is a copolymer, the copolymer may be a random copolymer or a block copolymer. For instance, the random copolymer may be a random copolymer of ethylene and propylene, and the block copolymer may be block copolymer with polypropylene blocks and polyethylene blocks. In particular, the polypropylene blocks may be blocks of isotactic polypropylene.

The polymeric material may comprise further components beside the polyolefin, as long as these components do not adversely affect the properties of the polymeric material. For example, besides the polyolefin, minor amounts of additives may be present, such as other polymers, processing aids, antioxidants, colorants, and the like. The polymeric material typically comprises the polyolefin in an amount of at least 50%, preferably at least 75%, more preferably at least 90%, even more preferably at least 95%, most preferably at least 99% by weight, based on the entire weight of the polymeric material.

In particular, the polymeric material may consist, or essentially consist, of the polyolefin.

In particular, the polyolefin may be polypropylene (PP), high-density polyethylene (HDPE), and/or ultra-high molecular weight polyethylene (UHMWPE).

The inventors have found that the use of these types of polyolefins in the polymeric material is advantageous because they possess high Shore D hardness and good resistance to chemicals and are not prone to stress cracking. Hence, by using PP, HDPE, and/or UHMWPE, a more durable piston can be obtained than with other types of polyolefins, such as, for example low-density polyethylene (LDPE).

LDPE is a branched polyethylene which typically has a lower density (ranging from about 0.915 g/cm3 to about 0.935 g/cm3) and a lower degree of crystallinity (ranging from about 40% to about 50%) than HDPE, which is a mostly linear (unbranched) polyethylene having a density ranging from about 0.94 g/cm3 to about 0.965 g/cm3 and a degree of crystallinity ranging from about 60% to about 80%. UHMWPE has longer molecular chains with more ethylene repeating units than other types of polyethylene, and has a molecular weight ranging from 2.0·106 g/mol to about 7.5·106 g/cm3. Therefore, in the context of the present application, the term "LDPE" denotes polyethylene having a density of less than 0.940 g/cm3, the term "HDPE" denotes polyethylene having a density of 0.940 g/cm3 or more, and the term "UHMWPE" denotes polyethylene having a molecular weight of 2.0·106 g/cm3 or more.

The polypropylene may in particular be homopolymeric polypropylene, i.e. polypropylene which is derived only from, or substantially only from, propylene monomers. The polypropylene (PP) may be atactic polypropylene (aPP), syndiotactic polypropylene (sPP), or isotactic polypropylene (iPP), in particular isotactic polypropylene (iPP). Polypropylene which is homopolymeric and/or isotactic is advantageous as it has higher hardness, tensile strength, and rigidity than other types of polypropylene.

In particular, the polymeric material may consist, or essentially consist, of PP, HDPE, and/or UHMWPE.

The polymeric material may have a Shore D hardness of 56 or more, 57 or more, 58 or more, 59 or more, 60 or more, 61 or more, 62 or more, 63 or more, 64 or more, 65 or more, 66 or more, 67 or more, 68 or more, 69 or more, 70 or more, 71 or more, 72 or more, 73 or more, 74 or more, 75 or more, 76 or more, 77 or more, 78 or more, 79 or more, or 80 or more.

By using a polymeric material having a high Shore D hardness within the ranges as defined above, it becomes possible to obtain a piston having high resistance to stress cracking. Thus, durability of the piston is improved, and leakages of fluid while dispensing material from the cartridge can be prevented.

The polymeric material may have a Shore D hardness of 95 or less, 94 or less, 93 or less, 92 or less, 91 or less, 90 or less, 89 or less, 88 or less, 87 or less, 86 or less, 85 or less, 84 or less, 83 or less, 82 or less, 81 or less, 80 or less, 79 or less, 78 or less, 77 or less, 76 or less, 75 or less, 74 or less, 73 or less, 72 or less, 71 or less, or 70 or less.

Keeping the Shore D hardness of the polymeric material below the above-mentioned upper limits may result in technical advantages, such as reduced brit-tleness, better toughness and flexibility, and improved processability due to lower viscosity and enhanced moldability of the polymeric material.

The polymeric material may comprise one or more inorganic fillers.

The addition of one or more inorganic fillers can be advantageous as it further increases the Shore D hardness of the polymeric material and thus the crack resistance of the piston.

The inorganic filler is not particularly limited. Examples of the one or more inorganic fillers include, but are not limited to, calcium carbonate, aluminum hydroxide, silica, talc (hydrated magnesium silicate, Mg3(OH)2[Si2O5]2), micas, clay minerals (hydrated aluminum phyllosilicates; e.g., kaolinite, Al2(OH)4Si2O5), dolomite (calcium magnesium carbonate, CaMg(CO3)2), glass fibers, carbon fibers, basalt fibers, or any combination thereof.

In particular, the total amount of the one or more inorganic fillers is 0.10% by mass or more, 0.20% by mass or more, 0.30% by mass or more, 0.40% by mass or more, 0.50% by mass or more, 1.0% by mass or more, 2.0% by mass or more, 3.0% by mass or more, or 4.0% by mass or more, based on the entire weight of the polymeric material.

By incorporating a total amount of inorganic fillers within the ranges mentioned above in the polymeric material, the Shore D hardness of the polymeric material is increased, the crack resistance of the piston is improved, and the likelihood of fluid material leaking from the cartridge is reduced.

In the present application, the Shore D hardness may be a Shore D hardness as determined according to ISO 48 4:2018(E).

Furthermore, the total amount of the one or more inorganic fillers may be 50% by mass or less, 49% by mass or less, 48% by mass or less, 47% by mass or less, 46% by mass or less, 45% by mass or less, 44% by mass or less, 43% by mass or less, 42% by mass or less, 41% by mass or less, 40% by mass or less, 39% by mass or less, 38% by mass or less, 37% by mass or less, 36% by mass or less, 35% by mass or less, 34% by mass or less, 33% by mass or less, 32% by mass or less, 31% by mass or less, 30% by mass or less, 29% by mass or less, 28% by mass or less, 27% by mass or less, 26% by mass or less, 25% by mass or less, 24% by mass or less, 23% by mass or less, 22% by mass or less, 21% by mass or less, 20% by mass or less, 19% by mass or less, 18% by mass or less, 17% by mass or less, 16% by mass or less, 15% by mass or less, 14% by mass or less, 13% by mass or less, 12% by mass or less, 11% by mass or less, 10% by mass or less, 9% by mass or less, 8% by mass or less, 7% by mass or less, 6% by mass or less, 5% by mass or less, 4% by mass or less, 3% by mass or less, 2% by mass or less, or 1% by mass or less.

When the inorganic filler content in the polymeric material is kept below the above-mentioned upper limits, technical advantages may be achieved, such as reduced brittleness, better toughness and flexibility, and improved processability of the resulting polymeric material.

The present inventors have found that the formation of cracks in the piston can be greatly reduced when the Shore D hardness of the polymeric material is 55 or more. The piston formed from such polymeric materials shows increased resistance towards the fluid material and improved durability. Hence, with a piston according to the present invention, fluid materials can be reliably and safely dispensed from a cartridge, without leakage due to cracks forming in the piston.

According to a further aspect the present invention relates to a cartridge comprising a piston as described herein and a material stored within the cartridge.

A piston respectively a cartridge as described herein can be used in a plethora of fields of application ranging from industrial applications, such as the use of adhesives to bond structural components one to another, or as coatings for buildings or vehicles, to medical and dental applications, in particular as filling material, mold material or bleaching material. The multi-component material is, for example, a two-component adhesive comprising a filler material and a hardener. Multi-component cartridges are available with various ratios of filling, also known as mixing ratios, for example at mixing ratios of 1:1, 2:1, 4:1, 10:1 etc. Mixers are known in the art that can beneficially be used for the mixing of such multi-component material.

In particular, the cartridge may be used for storing and/or dispensing a two-component system.

The two-component system may be a two-component (meth)acrylic system or a two-component vinyl ester system, such as, for instance, a two-component system including a first component comprising a (meth)acrylic resin or vinyl ester and a second component comprising an activator.

The two-component system may also be, for instance, an amine-epoxy two-component system including a first component comprising an epoxy resin and a second component comprising an amine curing agent (hardener).

The two-component system may also be, for instance, a two-component polyurethane system, in particular a two-component polyurethane system which includes a first component comprising an isocyanate-containing compound or an isocyanate precursor compound and a second component comprising a polyol.

The two-component system may also be, for instance, a two-component polyurea system, in particular a two-component polyurea system which includes a first component comprising an isocyanate-containing compound or an isocyanate precursor compound and a second component comprising an amine.

The two-component system may also be, for instance, a two-component polybutadiene system, a two-component silicone system, a two-component phenolic resin system, a two-component polyester system, or a two-component UV-curing adhesive.

The cartridge of the present invention may also be used for storing and/or dispensing a one-component system.

In particular, the one-component system may be, for instance, a one-component (meth)acrylic system or a one-component vinyl ester system.

The one-component system may also be, for instance, a one-component polyurethane system, a one-component (meth)acrylic system, a one-component cyanoacrylate system or a one-component methyl methacrylate system, a one-component polybutadiene system, a one-component silane-modified polymer system, a one-component silicone system, a one-component phenolic resin system, a one-component polyester system, a hot-melt adhesive, or a one-component UV-curing adhesive.

The invention will be described in an exemplary manner in the following with reference to the drawings, these show:
Fig. 1 a perspective view of a piston;
Fig. 2 a front view of the piston of Fig. 1;
Fig. 3 a side view of a piston of Fig. 1;
Fig. 4 a sectional view of the piston of Fig. 3 taken along the sectional line X-X;
Fig. 5 a rear view of the piston of Fig. 1; and
Fig. 6 a cartridge comprising a piston according to Fig. 1.

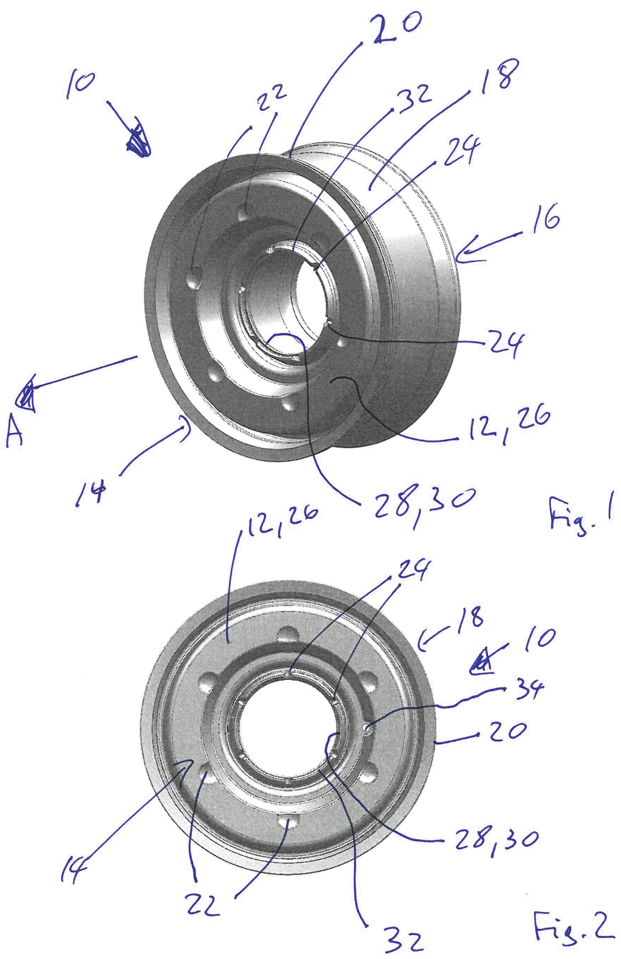

Fig. 1 shows a perspective view of a piston 10. The piston 10 includes a piston body 12 which has a conveying side 14 as well as a drive side 16 disposed opposite the conveying side 14. The piston 10 further includes a piston jacket 18, wherein the piston jacket is arranged around a piston axis A and the piston body 12 is surrounded by the piston jacket 18 at the peripheral side.

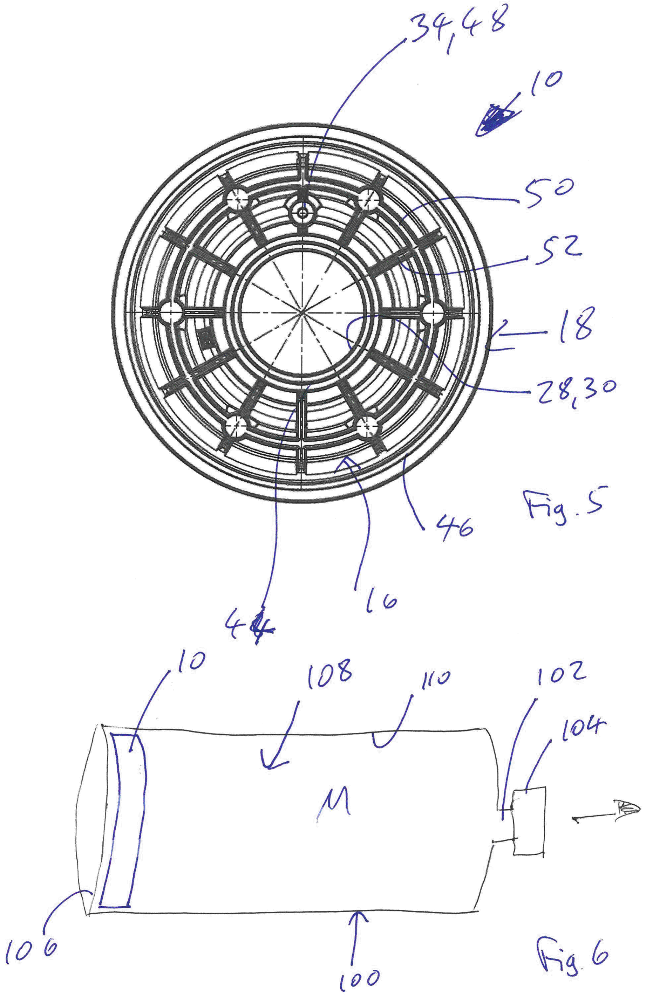

The piston jacket 18 in the shown example has one sealing element 20 in the form of a sealing lip that is configured to form a fluid-tight connection between the sealing element 20 of the piston jacket 18 and an inner wall 110 (see Fig. 6) of the storage chamber of the cartridge so that the sealing element 20 forms a fluid-tight connection between the conveying side 14 and the drive side 16 in the installed state, wherein the conveying side comprises one or more stress relieving features 24.

The piston 10 is a ring piston and the piston body 12 comprises a central aperture 28, with one aperture sealing element 30 being arranged facing radially inwardly at the aperture. Also in this instance the aperture sealing element is a sealing lip 30.

The piston 10 further comprises a centering ring 32. The stress relieving features are formed by cut-outs 24 that are arranged on the centering ring 32 of the ring piston 10.

The centering ring 32 is arranged at the central aperture 28 such that on insertion of the piston 10 into a co-axial cartridge 100 (see Fig. 6), the piston can be aligned at the co-axial cartridge 100.

The centering ring is arranged between the aperture sealing lip 30 and a front cover 26 of the piston 10. The piston 10 comprises an inner seat 36 that is set back from a front cover 26 of the piston 10.

The inner seat 36 is arranged at the same axial height as the centering ring 32.

The stress relieving features of the centering ring 32 are formed by the cut-outs 24. The cut-outs 24 are arranged at a radial inner part of the conveying side 14 and do not interfere with the aperture sealing element 30, since these are axially separated from the sealing element 30. Rather the cut-outs are arranged at the centering ring 32 that is arranged downstream of the sealing element 30 towards the front cover 26.

The conveying side 14 comprises a front cover 26, with the front cover 26 comprising depressions 22. The depressions 22 are points of injection of a material of the piston 10. This can, for example be a material having a shore hardness D of more than 55 or less than 95, for example the material could be HDPE.

Fig. 2 shows a front view of the piston 10 of Fig. 1. The piston 10 in the present example comprises six stress relieving features 24.

By way of example, a height of the centering ring 32 in the axial direction along the piston axis A may be selected in the range of 70% to 200% of a height of the aperture sealing lip 30 in the radial direction transverse to the piston axis A.

By way of example, a width of the centering ring 32 in the direction transverse to the piston axis A may be selected in the range of 70% to 200% of a height of the aperture sealing lip 30 in the radial direction transverse to the piston axis A.

By way of example, the centering ring 32 is arranged further away from the piston axis A than a radial most inner part of the aperture sealing lip 30.

By way of example, a depth of one or more of the stress relieving features 24 in the axial direction along the piston axis A may be selected in the range of 70% to 130% of a height of the aperture sealing lip 30 in the radial direction transverse to the piston axis A.

By way of example, a width of one or more of the stress relieving features 24 in the direction transverse to the piston axis A may be selected in the range of 70% to 130% of a height of the aperture sealing lip 30 in the radial direction transverse to the piston axis A.

In this connection it should be noted that between two and 30, preferably between three and 15, such stress relieving features 24 could be provided at the piston 10.

It should further be noted that the stress relieving features 24 may be arranged uniformly distributed at the centering ring 32. By way of example as is shown in Fig. 2 at every 60° relative to the piston axis A.

In a similar way six depressions 22 are provided at the piston 10. Also in this case more or less depressions can be provided. By way of example between three and 15 such depressions 22 could be provided at the piston 10.

The depressions 22 can be arranged at the same radial positions as the stress-relieving features 24, or also shifted relative thereto.

The number of depressions 22 can be selected such that it is equal to a number of stress relieving features 24. Also less depressions 22 can be selected than the number of stress relieving features 24.

The depressions 22 are provided at positions of the piston where a material of the piston 10 is injected into the mold used for forming the piston 10. The depressions 22 are not allowed to project beyond the front cover 26 of the piston 10 where they coud interfere with the cartridge 100 when the piston 10 is pressed fully down at a near empty stage of the cartridge 100.

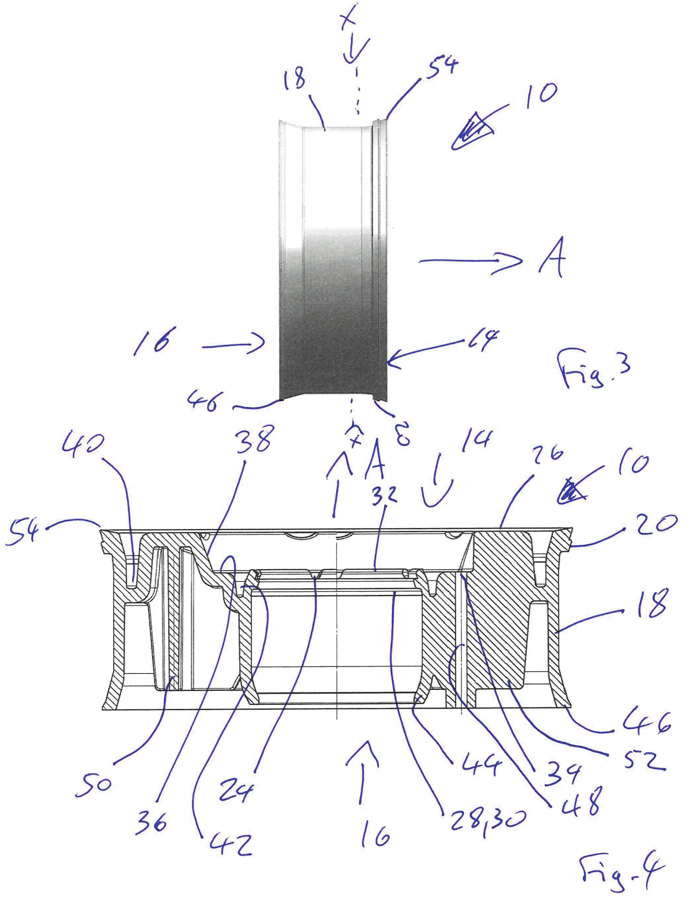

Fig. 3 shows a side view of the piston 10 of Fig. 1. The sealing element 20 of the piston jacket 18 is arranged at the conveying side 14 set back from a peripheral edge 54 of the piston 10.

The peripheral edge 54 has a reduced outer diameter with respect to the sealing element 20. The peripheral edge 54 can be used in order to guide the piston 10 into the cartridge 100 as a positioning aid on insertion of the piston 10 into the cartridge 100.

The drive side 16 of the piston 10 comprises a guide element 16 at the piston jacket 18. This guide element 16 aids in guiding the piston 10 in a cartridge 100 during use thereof. As it prevents the piston 10 from becoming skew in the cartridge 100.

The guide element 16 is arranged oppositely disposed to the peripheral edge 54 of at the piston jacket 18.

Fig. 4 shows a sectional view of the piston of Fig. 3 taken along the sectional line X-X. As can be seen the front cover 26 has an at least generally planar extent transverse to the piston axis A.

The front cover 26 extends between the peripheral edge 54 and the central aperture 28. More precisely the conveying side 14 of the piston 10 from left to right in Fig. 4 comprises the peripheral edge 54, an outer annular recess 40, an inner tapering surface 38, the inner seat 36, an inner annular recess and the centering ring 32.

Both the outer and inner annular recesses 40, 42 are provided in order to permit a movement of the sealing element 20 and of the sealing element 30 relative to the front cover 26 and a cartridge wall, as the piston 10 is moved in a cartridge.

The piston body 12 contains a venting element 34 by which the conveying side 14 and the drive side 16 can be connected to one another by a respective venting passage 48. This venting passage 48 is used to remove gas, such as air from the conveying side of the piston 10 during and after filling of the cartridge 100 with the material M.

A peripheral support rib 50 is also visible in the piston body 12 that extends in a ring shaped manner around the piston body 12 in order to provide the piston 10 with an inherent mechanical stiffness.

Furthermore, transverse support ribs 52 are provided to further increase the mechanical stiffness. These transverse support ribs 52 extend transversely to the peripheral support rib 50.

At the drive side 16, the central aperture 28 has a guide element 44 that tapers into the central aperture 28. This guide element is used as a centering aid relative to a cartridge inner wall (not shown) as the ring piston 10 is moved in the cartridge 100.

Fig. 5 shows a rear view of the piston 10 of Fig. 1. The peripheral support rib 50 is visible that has a cylindrical shape and extends through the piston body 12 in a ring shaped manner at a radial outer part of the piston body 12.

The transverse support ribs 52 extend between the piston jacket 18 and the central aperture 28 and transversely cross the peripheral support rib 50.

The guide elements 44 and 46 act as elements securing against tilting of the piston 10 when this is arranged and moved in a co-axial cartridge 100.

Fig. 6 shows a cartridge 100 comprising the piston 10 as described herein. The cartridge shown may be a so-called coaxial cartridge 100 or a one-component cartridge 100. The cartridge 100 comprises an outlet 102 that can be sealed off by a cap 104 in a manner known per se. The cartridge 100 further comprises a rear end 106 via which the piston 10 can be inserted. The cartridge 100 has a cartridge chamber 108 in which a material M can be stored.

If the cartridge 100 is a coaxial cartridge this comprises an inner cartridge chamber (not shown) that is surrounded by an outer cartridge chamber 108. In this instance the cartridge will comprise a ring piston 10 for the outer cartridge chamber 108 and a further piston (also not shown) for the inner cartridge chamber. Such cartridges are generally known for the storage of two-component materials that are generally stored separate from one another to increase the shelf life of the cartridge 100 and then mixed following a dispensing thereof to obtain the desired material for its intended use, such as e.g. an adhesive, paint, or the like.

### List of reference numerals:

- 10: piston
- 12: piston body
- 14: conveying side
- 16: drive side
- 18: piston jacket
- 20: sealing element
- 22: depression
- 24: cut-out
- 26: front cover
- 28: central aperture
- 30: sealing element
- 32: centering part
- 34: venting element
- 36: inner seat
- 38: inner tapering surface
- 40: outer annular recess
- 42: inner annular recess
- 44: guide element
- 46: guide element
- 48: venting passage
- 50: peripheral support rib
- 52: transverse support rib
- 54: peripheral edge

- 100: cartridge
- 102: outlet
- 104: cap
- 106: rear end of 100
- 108: chamber
- 110: inner wall of 100
- A: axis
- M: material

## Claims

1. A piston (10) for a cartridge (100) for storing a material in a storage chamber of the cartridge, including a piston body (12) which has a conveying side (14) as well as a drive side (16) disposed opposite the conveying side (14), the piston (10) including a piston jacket (18), wherein the piston jacket is arranged around a piston axis (A) and the piston body (12) is surrounded by the piston jacket (18) at the peripheral side, wherein the piston jacket (18) has one or more sealing elements (20) for forming a fluid-tight connection between the sealing element (20) of the piston jacket (18) and an inner wall of the storage chamber (108) of the cartridge (100) so that the sealing element (20) forms a fluid-tight connection between the conveying side (14) and the drive side (16) in the installed state, wherein the conveying side comprises one or more stress relieving features (24).

2. The piston according to claim 1, wherein the one or more stress relieving features comprise cut-outs (24).

3. The piston according to claim 1 or claim 2, wherein the piston (10) is a ring piston and the piston body (12) comprises a central aperture (28), with one or more aperture sealing elements (30) being arranged facing radially inwardly at the aperture.

4. The piston according to claims 2 and 3, wherein the cut-outs (24) are arranged at the one of the one or more sealing elements (30).

5. The piston according to claim 3 or 4, further comprising a centering ring (32).

6. The piston according to claim 5, wherein the centering ring (32) is arranged at the central aperture (28).

7. The piston according to claim 6, wherein the centering ring is arranged between one of the one or more aperture sealing elements and a front cover (26) of the piston (10).

8. The piston according to one of claims 1 to 7, wherein the piston (10) comprises an inner seat (36) set back from a front cover (26) of the piston (10).

9. The piston according to claim 8 and one of claims 5 to 7, wherein the inner seat (36) is arranged at the same axial height or at approximately the same axial height as the centering ring (32) or wherein the inner seat (36) is arranged closer to the drive side (16) than the centering ring (32).

10. The piston according to one of claims 5 to 9, wherein the centering ring (32) comprises said one or more stress relieving features (24).

11. The piston according to one of claims 5 to 11, wherein the stress relieving features of the centering ring (32) are formed by the cut-outs (24).

12. The piston according to one of claims 1 to 11, wherein the one or more stress relieving features (24) are arranged at a radial inner part of the conveying side (14).

13. The piston according to one of claims 1 to 12, wherein the one or more stress relieving features ( 24) do not interfere with a sealing element (30).

14. The piston according to one of claims 1 to 13, wherein the conveying side comprises a front cover (26), with the front cover (26) comprising depressions (22).

15. The piston according to one of claims 1 to 14, wherein the piston (10) is made of a polymeric material comprising at least one polymer, the polymeric material having a Shore D hardness of 55 or more.

16. A cartridge comprising a piston (10) according to one of the preceding claims and a material (M) stored within the cartridge.
